# EUROPÄISCHE PATENTSCHRIFT

(11) **EP 3 299 095 B1**
(45) Veröffentlichungstag und Bekanntmachung des Hinweises auf die Patenterteilung: **20.03.2019**
(21) Anmeldenummer: 17192292.5
(22) Anmeldetag: 21.09.2017
(51) Int. Cl.: B21D 28/12, B21D 28/36, B21D 43/18

(54) **WERKZEUG UND VERFAHREN ZUMINDEST ZUM HANDHABEN VON WERKSTÜCKEN**
TOOL AND METHOD AT LEAST FOR HANDLING WORK PIECES
OUTIL ET PROCÉDÉ POUR AU MOINS MANIPULER DES PIÈCES À USINER

(30) Priorität: 26.09.2016 DE 102016118153
(43) Veröffentlichungstag der Anmeldung: 28.03.2018
(73) Patentinhaber: TRUMPF Werkzeugmaschinen GmbH + Co. KG, 71254 Ditzingen (DE)
(72) Erfinder: Wilhelm, Markus, 70839 Gerlingen (DE); Bauser, Maximilian, 75397 Simmozheim (DE)
(74) Vertreter: Mammel und Maser

(56) Entgegenhaltungen:
- EP-A1- 2 457 675
- DE-A1-102009 013 437
- DE-U1- 8 900 752
- JP-A- 2000 033 440

## Beschreibung

Die Erfindung betrifft ein Werkzeug und ein Verfahren zumindest zum Handhaben von Werkstücken in einer Bearbeitungsmaschine.

Aus der DE 10 2013 103 123 A1 sind ein Verfahren zur Handhabung, insbesondere zur Entnahme von Werkstücken, aus einer Bearbeitungsmaschine sowie eine Bearbeitungsmaschine bekannt, welche aus einem plattenförmigen Material, das auf einer Werkstückauflage aufliegt, mit einer Bearbeitungseinrichtung durch Trennschneiden Werkstücke herstellt. Nach dem Herstellen der Werkstücke werden diese mittels einer Entnahmeeinrichtung entnommen, welche mehrere segmentförmige Halteelemente umfasst. Diese Halteelemente sind beispielsweise als Vakuumsauger ausgebildet. Durch ein aktives Anlegen des Vakuums können die bearbeiteten Werkstücke gegriffen und anschließend transportiert werden.

Zur Bearbeitung der Werkstücke aus einem plattenförmigen Material in einer Bearbeitungsmaschine werden beispielsweise Werkzeuge eingesetzt, welche aus der DE 10 2009 013 437 A1 und aus der EP 2 457 675 A1 bekannt sind.

Aus der DE 89 00 752 U ist eine Vorrichtung zur Handhabung von Gegenständen bekannt. Diese umfasst einen Handgriff, der an einem Ende einen Saugnapf aufweist. Dieser ist zum einen Ende hin offen, und sein Innenvolumen ist mit einer wiederverschließbaren Belüftungsöffnung verbunden.

Der Erfindung liegt die Aufgabe zugrunde, ein Werkzeug zumindest zum Handhaben von Werkstücken in einer Bearbeitungsmaschine sowie ein Verfahren zumindest zum Handhaben von in der Bearbeitungsmaschine bearbeiteten Werkstücken vorzuschlagen, wodurch das Handhaben von Werkstücken ohne Druckluftanschluss ermöglicht ist.

Diese Aufgabe wird durch ein Werkzeug gelöst, bei welchem zwischen einem Werkzeuggrundkörper und einem fest daran angeordneten Einspannzapfen ein Indexierrad angeordnet ist, welche relativ zueinander drehbar sind, vorzugsweise um eine gemeinsame Längsmittelachse, so dass zumindest ein an dem Werkzeuggrundkörper oder dem Indexierrad vorgesehenes Saugelement in eine Aktivposition überführbar ist, in welcher ein Fluidkanal des Saugelementes geschlossen ist und durch Längung des Saugelementes sich das zumindest eine Saugelement an dem Werkstück festsaugt und das zumindest eine Saugelement durch das Indexierrad oder den Werkzeuggrundkörper in eine Ruheposition überführbar ist, in welcher der Fluidkanal des zumindest einen Saugelementes geöffnet ist und somit das zumindest eine Saugelement belüftet wird. Diese Ausgestaltung des Werkzeugs ermöglicht, dass die Ansteuerung des zumindest einen Saugelementes in gleicher Weise erfolgen kann wie bei einem Werkzeug, welches einen analogen Aufbau mit einem Werkzeuggrundkörper, dem Einspannzapfen und einem dazwischen drehbar angeordneten Indexierrad aufweist, um einzelne an dem Werkzeuggrundkörper angeordnete Bearbeitungswerkzeuge, wie beispielsweise Stanzwerkzeuge, zu aktivieren. Darüber hinaus ist durch die Anordnung von zumindest einem solchen Saugelement an dem Werkzeuggrundkörper oder dem Indexierrad ein aktives Anlegen eines Unterdrucks oder Vakuums entbehrlich. Vielmehr ist ein passives Saugelement vorgesehen, welches ein Vakuum oder einen Unterdruck aufgrund einer Veränderung des Volumens innerhalb des Saugelementes, insbesondere durch eine Längung des Saugelementes, aufbaut.

Des Weiteren ist bevorzugt der zumindest eine Fluidkanal des Saugelementes in Richtung auf das Indexierrad oder den Werkzeuggrundkörper ausgerichtet. Dadurch kann eine kompakte Anordnung geschaffen werden. Zudem kann der prinzipielle Aufbau solcher Werkzeuge bestehend aus dem Werkzeuggrundkörper, dem Einspannzapfen und dem Indexierrad beibehalten bleiben.

Bevorzugt wird zum Aktivieren des zumindest einen Saugelementes das Indexierrad oder der Werkzeuggrundkörper in eine Drehrichtung gegenüber dem Werkzeuggrundkörper oder dem Indexierrad gedreht, um die Aktivposition des zumindest einen Saugelementes anzusteuern und durch eine weitere Drehbewegung in dieselbe Richtung oder in eine entgegengesetzte Drehrichtung in die Ruheposition überführbar ist. Dabei wird bevorzugt entweder der Werkzeuggrundkörper gedreht und das Indexierrad steht still oder das Indexierrad wird gedreht und der Werkzeuggrundkörper steht still. Auch kann eine gleichzeitige Relativdrehung zueinander erfolgen. Dadurch wird eine flexible Ansteuerung des zumindest einen Saugelementes ermöglicht. Insbesondere können, wenn mehrere Saugelemente an dem Werkzeuggrundkörper oder dem Indexierrad angeordnet sind, durch eine entsprechende Positionierung des Indexierrades oder des Werkzeuggrundkörpers ein oder mehrere Saugelemente in eine Aktivposition übergeführt werden. Das Indexierrad beziehungsweise der Werkzeuggrundkörper dreht sich um die Längsmittelachse des Werkzeuggrundkörpers, welche bevorzugt einer Hubachse des Werkzeuggrundkörpers entspricht.

Des Weiteren ist bevorzugt an dem Indexierrad oder dem Werkzeuggrundkörper zumindest ein Steuerglied vorgesehen, welches zum Saugelement weisend ausgerichtet ist und den Fluidkanal öffnet und schließt. Dadurch kann mittels einer Drehbewegung des Indexierrades oder des Werkzeuggrundkörpers um die Längsmittelachse des Werkzeuggrundkörpers eine unmittelbare Ansteuerung des Saugelementes ermöglicht sein, um beispielsweise in einer Aktivposition den Fluidkanal des Saugelementes zu schließen.

Das bevorzugt als Verschluss ausgebildete Steuerglied weist eine Schließfläche auf, welche den Fluidkanal schließt. In dieser Schließposition ist das Saugelement aktiviert. Benachbart zur Schließfläche oder an die Schließfläche angrenzend ist bevorzugt eine Auflaufschräge vorgesehen. Somit kann durch die Drehbewegung des Indexierrades oder des Werkzeuggrundkörpers ein Aufgleiten des Verschlusses auf die Öffnung des Fluidkanals und ein darauffolgendes Abdichten des Fluidkanals erfolgen. Zur einfachen Herstellung und Montage des Verschlusses an dem Indexierrad oder an dem Werkzeuggrundkörper ist der Verschluss als ein pilzkopfförmiger Verschlussstopfen ausgebildet, der umlaufende Auflaufschrägen aufweist. Dadurch kann dieser in einfacher Weise an dem Indexierrad in eine Bohrung eingesetzt und in der Länge relativ zum Fluidkanal fixiert werden. Zudem ist eine Ausrichtung des Verschlusses zum Indexierrad oder zum Werkzeuggrundkörper entbehrlich.

Gemäß einer alternativen Ausführungsform des Werkzeugs zur Aktivierung des zumindest einen Saugelementes ist eine Steuerkurve vorgesehen, welche an dem Indexierrad oder dem Werkzeuggrundkörper oder dem Einspannzapfen angeordnet ist, wobei die Steuerscheibe drehfest mit dem Indexierrad oder dem Werkzeuggrundkörper oder dem Einspannzapfen verbunden ist. Diese Steuerscheibe umfasst zumindest eine Steuerkurve, welche das zumindest eine Steuerglied betätigt, wobei das Steuerglied in dem Saugelement vorgesehen ist. Das im Saugelement angeordnete Steuerglied ist bevorzugt in einer Grundposition geschlossen, das heißt, das Saugelement ist aktiv. Der Fluidkanal im Saugelement ist geschlossen. Alternativ kann das Steuerglied im Saugelement geöffnet sein, das heißt, dass der Fluidkanal geöffnet und das Saugelement in einer Passivposition ist. Diese Ausführungsform, bei der das Steuerglied in dem Saugelement positioniert und durch die Steuerkurve ansteuerbar ist, stellt eine alternative Ausführungsform zu der vorbeschriebenen Anordnung dar, bei der das Steuerglied als Verschluss mit einer Schließfläche ausgebildet ist.

Eine bevorzugte Ausgestaltung des Werkzeuges mit einer Steuerscheibe sieht vor, dass zwischen der Steuerscheibe und dem Werkzeuggrundkörper oder zwischen der Steuerscheibe und dem Indexierrad oder zwischen dem Einspannzapfen und der Steuerscheibe eine Aktivierungsscheibe vorgesehen ist, welche bei einer Drehbewegung der Steuerscheibe mit einer Hubbewegung längs der Längsmittelachse des Werkzeuggrundkörpers ansteuerbar ist. Dadurch kann das zumindest eine im Saugelement angeordnete Steuerglied durch die Aktivierungsscheibe angesteuert und beispielsweise aus einer aktiven - also geschlossenen - Position in eine geöffnete - also passive - Position übergeführt werden.

Bei den beiden zuletzt genannten Ausführungsformen des Werkzeugs ist das Steuerglied bevorzugt als ein Ventil ausgebildet. Insbesondere ist ein Ventil mit einem betätigbaren Stößel vorgesehen. Der Stößel des Ventils ragt vorzugsweise über einen Befestigungsabschnitt des Balgelements in Richtung auf die Steuerscheibe oder Aktivierungsscheibe heraus.

Das zumindest eine Saugelement ist bevorzugt durch eine lösbare Verbindung an dem Werkzeuggrundkörper oder dem Indexierrad vorgesehen. Dadurch ist in einfacher Weise ein Austausch ermöglicht. Zudem kann bei der Anordnung von mehreren Saugelementen an dem Werkzeuggrundkörper oder dem Indexierrad in einfacher Weise eine entsprechende Anpassung an die Größe der zu handhabenden Werkstücke aufgrund der Anzahl und/oder Position der an dem Werkzeuggrundkörper oder dem Indexierrad vorgesehenen Saugelemente erfolgen.

Die lösbare Verbindung zwischen dem Saugelement und dem Werkzeuggrundkörper oder dem Indexierrad kann durch einen Befestigungsabschnitt erfolgen, der den Saugkanal umgibt oder umfasst. Beispielsweise kann eine Schraubverbindung, ein Bajonettverschluss, eine Rastverbindung oder dergleichen vorgesehen sein, um die Saugelemente am Werkzeuggrundkörper oder am Indexierrad zu fixieren.

Das zumindest eine Saugelement umfasst bevorzugt einen Saugnapf, der insbesondere balgförmig ausgebildet ist und eine ringförmige Anschlussfläche aufweist. Dadurch kann in einfacher Weise durch Längung des Saugnapfes ein Unterdruck oder ein Vakuum erzeugt werden, um sich an dem Werkstück anzusaugen. Der Saugnapf ist bevorzugt am Befestigungsabschnitt befestigt, insbesondere aufsteckbar.

Eine bevorzugte Ausführungsform des Werkzeugs sieht eine Mehrzahl von Saugelementen vor, die aufeinanderfolgend in einem Umfangskreis am Werkzeuggrundkörper oder am Indexierrad angeordnet sind. Bevorzugt ist in demselben Umfangskreis eine Mehrzahl von Steuergliedern vorgesehen, wobei es sich um eine geringere oder die gleiche Anzahl der Steuerglieder wie Saugelemente handeln kann. Dadurch kann bei einer gleichzeitigen Ansteuerung von mehreren Saugelementen eine vergrößerte Saugfläche wirken, um auch schwere Werkstücke aufzunehmen oder ein verkippungsfreies Anheben von Werkstücken zu ermöglichen.

Alternativ kann anstelle einer Mehrzahl von Saugelementen, die vorzugsweise in einem Umfangskreis zueinander am Werkzeuggrundkörper oder am Indexierrad angeordnet sind, auch zumindest ein ringförmiges Saugelement vorgesehen sein, welches sich teilweise oder vollständig um 360° erstreckt. Auch dadurch kann die Handhabung von Werkstücken ermöglicht sein.

Eine vorteilhafte Weiterbildung des Werkzeuges sieht benachbart zum zumindest einen Saugelement zumindest ein Bearbeitungswerkzeug vor. Dadurch kann das Bearbeiten und Handhaben von Werkstücken in einem Werkzeug kombiniert sein. Dies ermöglicht die Reduzierung von Taktzeiten und Rüstzeiten. Vorteilhafterweise ist bei der Anordnung eines ringförmigen Saugelementes am Werkzeuggrundkörper oder von einer Mehrzahl in einem Umfangskreis am Werkzeuggrundkörper angeordneten Saugelementen das zumindest eine Bearbeitungswerkzeug innerhalb des ringförmigen Saugelements oder der Mehrzahl der Saugelemente vorgesehen.

Das Werkzeug kann als Bearbeitungswerkzeug zumindest ein Stanz- und/oder ein Clinch-Werkzeug aufweisen.

Des Weiteren ist bevorzugt das zumindest eine an dem Werkzeuggrundkörper angeordnete Bearbeitungswerkzeug feststehend zum Werkzeuggrundkörper vorgesehen oder das zumindest eine Bearbeitungswerkzeug durch das Indexierrad aktivierbar. Letzteres bedeutet, dass bei der Durchführung einer Hubbewegung des Werkzeugs das aktivierte Bearbeitungswerkzeug seine Position gegenüber dem Werkzeuggrundkörper beibehält, wobei ein inaktives Bearbeitungswerkzeug in den Werkzeuggrundkörper eingefahren wird. Dadurch kann ein sogenanntes Mehrfachwerkzeug geschaffen werden, welches sowohl verschiedene Bearbeitungsschritte als auch eine Handhabung des Werkstücks ermöglicht.

Bevorzugt ist bei dem Werkzeug mittels zumindest einem Saugelement und einem Bearbeitungswerkzeug eine Stirnseite des Bearbeitungswerkzeuges gegenüber einer Stirnseite des zumindest einen Saugelementes zurückversetzt oder beide sind auf gleicher Höhe beabstandet zum Werkzeuggrundkörper angeordnet. Dadurch kann während oder nach der Durchführung eines Arbeitshubes mittels des Bearbeitungswerkzeugs ein Komprimieren des Saugelementes sichergestellt werden, um bei einer darauffolgenden Längung einen Unterdruck innerhalb des Saugelementes zum Werkstück zu erzeugen, so dass dieses Saugelement sich an dem Werkstück festsaugt.

Die der Erfindung zugrundeliegende Aufgabe wird des Weiteren durch ein Verfahren zumindest zum Handhaben von Werkstücken mit einem Werkzeug gelöst, bei dem zumindest ein in einem Haltebereich eines Indexierrades angeordnetes Saugelement auf das zu handhabende Werkstück aufgesetzt und komprimiert wird und bei dem vor, während oder nach dem Aufsetzen des zumindest einen Saugelements auf dem Werkstück ein Werkzeuggrundkörper, der drehbar mit dem Indexierrad verbunden ist, gedreht und das zumindest eine Saugelement in eine Aktivposition übergeführt wird. Darauffolgend wird durch Anheben des Werkzeugs gegenüber dem Werkstück das zumindest eine Saugelement gestreckt oder gelängt, wodurch dieses sich an dem Werkstück festsaugt. Darauffolgend kann das Werkstück abgehoben werden. Dieses Verfahren ermöglicht eine einfache und kostengünstige Handhabung von Werkstücken. Die Bereitstellung einer Druckluftversorgung zur Ansteuerung des zumindest einen Saugelementes ist nicht erforderlich. Vielmehr kann eine Handhabung von Werkstücken mit zumindest einem passiven Saugelement durchgeführt werden. Zudem kann das Werkstück auch über eine Abgabestelle abgeworfen werden.

Die der Erfindung zugrundeliegende Aufgabe wird des Weiteren durch ein Verfahren zum Handhaben von Werkstücken mit einem Werkstück gelöst, bei dem zumindest ein in einem Aufnahmebereich eines Werkzeuggrundkörpers angeordnetes Saugelement das zu handhabende Werkstück aufgesetzt und komprimiert wird und bei dem vor, während oder nach dem Aufsetzen des zumindest einen Saugelementes auf dem Werkstück der Werkzeuggrundkörper gegenüber einem stillstehenden oder in einer Ruheposition gehaltenen Indexierrad gedreht und das zumindest eine Saugelement in eine Aktivposition relativ zum Indexierrad übergeführt wird. Dadurch ist bereits vor dem Aufsetzen des Werkzeugs auf dem Werkstück das zumindest eine Saugelement in einer Aktivposition, und nach dem Aufsetzen und Komprimieren des zumindest einen Saugelementes auf dem Werkstück wird durch Anheben des Werkzeugs gegenüber dem Werkstück das zumindest eine Saugelement gestreckt oder gelängt, wodurch sich dieses am Werkstück festsaugt. Darauffolgend kann das Werkstück abgehoben werden. Dieses Verfahren ermöglicht eine einfache und kostengünstige Handhabung von Werkstücken. Die Bereitstellung einer Druckluftversorgung zur Ansteuerung des zumindest einen Saugelementes ist auch bei dieser Alternative nicht erforderlich. Vielmehr kann eine Handhabung von Werkstücken mit zumindest einem passiven Saugelement durchgeführt werden.

Bevorzugt ist das Verfahren zum Handhaben von Werkstücken mit einem Werkzeug durch einen Bearbeitungsschritt mit einem an dem Werkzeuggrundkörper angeordneten Bearbeitungswerkzeug erweiterbar, indem beim Aufsetzen oder Komprimieren des zumindest einen Saugelementes auf dem Werkstück mit zumindest einem an den Werkzeuggrundkörper angeordneten Bearbeitungswerkzeug ein Bearbeitungsschritt an dem Werkstück durchgeführt wird. Dabei kann das zumindest eine Saugelement vor, während oder nach dem Bearbeitungsschritt in eine Aktivposition übergeführt werden, so dass nach einem Arbeitshub des Bearbeitungswerkzeugs und spätestens vor einer Anhebebewegung des Werkzeugs entgegengesetzt zum Werkstück das zumindest eine Saugelement aktiviert ist, darauffolgend sich an dem Werkstück festzusaugen und dieses anzuheben. Ein solches Bearbeitungswerkzeug kann beispielsweise ein Stanzstempel sein, um beispielsweise Stegverbindungen, sogenannte Mikrojoints, welche ein quasi freigeschnittenes Werkstück zu einem plattenförmigen Material oder Restgitter positionieren, freizuschneiden. Ebenso kann beispielsweise mittels dem Werkzeug ein Werkstück angehoben und in eine Bearbeitungsposition oder in eine Position zu einem weiteren Werkstück, die gemeinsam zu bearbeiten sind, übergeführt werden, in welcher eine Bearbeitung durchgeführt wird, beispielsweise das Einbringen einer Ausstanzung, einer Prägung, einer Vertiefung oder Wölbung einer Lasche, einer Markierung oder dergleichen. Anschließend kann das Werkstück unter Beibehaltung der Positionierung durch das zumindest eine Saugelement zum Werkstück in eine weitere Position verfahren werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Werkstückbearbeitungsmaschine,
Figur 2 eine schematische Seitenansicht einer ersten Ausführungsform eines Werkzeuges,
Figur 3 eine schematische Schnittansicht des Werkzeugs gemäß Figur 2 in einer Ruheposition,
Figur 4 eine schematische Ansicht von unten auf das Werkzeug in einer Ruheposition gemäß Figur 3,
Figur 5 eine schematische Schnittansicht des Werkzeugs gemäß Figur 2 in einer Aktivposition,
Figur 6 eine schematische Ansicht von unten auf das Werkzeug in einer Aktivposition gemäß Figur 5,
Figur 7 eine perspektivische Ansicht des Werkzeugs gemäß Figur 2 in einem ersten Anwendungsfall,
Figur 8 eine schematische Schnittansicht des Werkzeugs gemäß Figur 7,
Figur 9 eine schematische Schnittansicht des alternativen Werkzeuges gemäß Figur 7 in einem weiteren Anwendungsfall,
Figur 10 eine perspektivische Schnittansicht einer alternativen Ausführungsform des Werkzeugs zu Figur 2,
Figur 11 eine schematische Schnittansicht des Werkzeugs gemäß Figur 10 in einer Aktivposition,
Figur 12 eine schematische Schnittansicht einer weiteren alternativen Ausführungsform des Werkzeugs zu Figur 2,
Figur 13 eine perspektivische Ansicht einer Steuerscheibe des Werkzeugs gemäß Figur 12,
Figur 14 eine schematische Schnittansicht einer weiteren alternativen Ausführungsform des Werkzeugs zu Figur 12 in einer Aktivposition, und
Figur 15 eine schematische Schnittansicht des Werkzeugs gemäß Figur 14 in einer Ruheposition.

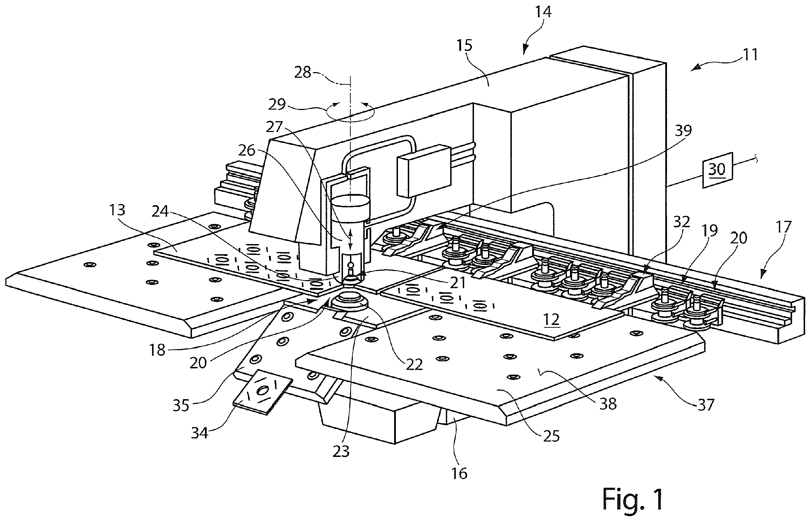

In Figur 1 ist perspektivisch eine Werkstückbearbeitungsmaschine 11 zum Bearbeiten von plattenförmigen Materialien 12, 13, wie beispielsweise Blechen, dargestellt. Die Werkstückbearbeitungsmaschine 11 kann nur eine oder auch mehrere plattenförmige Materialien 12, 13 aufnehmen und bearbeiten. Die Bearbeitung von solchen plattenförmigen Materialien 12, 13 kann dabei Stanzen, Biegen, Signieren, Prägen, Gravieren, Entgraten, Rollumformen, insbesondere Rollkneifen, Gewindeformen als auch ein Folientrennen einer Folie auf der Oberfläche des plattenförmigen Materials 12, 13 umfassen. Des Weiteren kann eine solche Werkstückbearbeitungsmaschine 11 ergänzend eine Schneidbearbeitung mittels eines Lasers ermöglichen. Die Werkstückbearbeitungsmaschine 11 besitzt ein C-förmiges Grundgestell 14 mit einem oberen Gestellschenkel 15 und einem unteren Gestellschenkel 16. In einem Rachenraum zwischen dem oberen Gestellschenkel 15 und dem unteren Gestellschenkel 16 ist eine herkömmliche Koordinatenführung 17 untergebracht. Diese dient zum Positionieren beziehungsweise Bewegen der plattenförmigen Werkstücke 12, 13 gegenüber einer Bearbeitungsstation 18 der Werkstückbearbeitungsmaschine 11 sowie zur Magazinierung und zum Ein- und Auswechseln von Werkzeugen 19, 20 an der Bearbeitungsstation 18.

An der Bearbeitungsstation 18 ist ein Werkzeug 19 eingewechselt, welches ein Oberwerkzeug 21 und ein Unterwerkzeug 22 umfasst. Das Unterwerkzeug 22 ist in einer Unterwerkzeugaufnahme 23 am Maschinentisch 25 angeordnet, der einerseits auf dem unteren Gestellschenkel 16 des Grundgestells 14 ruht. Das Oberwerkzeug 21 ist an einer Oberwerkzeugaufnahme 24 eines Stößels 26 gelagert. Dieser ist an dem oberen Gestellschenkel 15 des Grundgestells 14 in Richtung eines Doppelpfeils 27 beispielsweise hydraulisch auf und ab bewegbar. Um eine Hubachse 28 des Stößels 26 sind sowohl das Oberwerkzeug 21 als auch das Unterwerkzeug 22 in Richtung eines Doppelpfeils 29 einstellbar beziehungsweise zustellbar. Entsprechende Zustellbewegungen werden ebenso wie die übrigen wesentlichen Maschinenfunktionen mittels einer schematisch dargestellten Steuerung 30 der Werkstückbearbeitungsmaschine 11 gesteuert. In einem Arbeitsbereich 37 der Bearbeitungsstation 18, welcher durch zumindest eine Werkstückauflage 38 des Maschinentisches 25 gebildet ist, ist zumindest ein erstes plattenförmiges Material 12 durch eine Greifvorrichtung 32 während der Bearbeitung mit dem Werkzeug 19 gehalten und relativ in der Bearbeitungsstation 18 verfahrbar geführt. Des Weiteren kann in dem Arbeitsbereich 37 zumindest ein weiteres beziehungsweise zweites plattenförmiges Material 13 durch eine weitere Greifvorrichtung 39 gehalten sein, wobei diese Greifvorrichtung 39 vorteilhafterweise der Greifvorrichtung 32 entspricht. Diese beiden Greifvorrichtungen 32/39 sind vorzugsweise unabhängig voneinander zum Verfahren des ersten plattenförmigen Materials 12 und zweiten plattenförmigen Materials 13 auf der Werkstückauflage 38 ansteuerbar. Alternativ können noch weitere plattenförmige Materialien durch weitere Greifvorrichtungen in dem Arbeitsbereich 37 angeordnet und aufgenommen sein.

Das erste plattenförmige Material 12 weicht vorteilhafterweise von dem zweiten plattenförmigen Material 13 ab. Dies kann in der Materialdicke, in der Materialwahl und/oder in der Oberfläche des plattenförmigen Materials 12, 13 liegen. Nach dem Fertigstellen eines Werkstücks 34 aus einem plattenförmigen Material 12, 13 oder eines verstärkten Werkstücks aus dem ersten und zumindest einen weiteren, insbesondere zweiten, plattenförmigen Material 12, 13 wird dieses Werkstück 34 beispielsweise durch Absenken eines Tischsegmentes 35 des Maschinentisches 25 aus der Bearbeitungsstation 18 herausgeführt.

Das oder die Werkzeuge 19 können beispielsweise dem in der
DE 10 2009 013 437 A1 beschriebenen Werkzeug und deren Ausführungsformen entsprechen. Ebenso kann das Werkzeug 19 in der Ausführungsform gemäß der DE 10 2005 005 214 A1 vorgesehen sein.

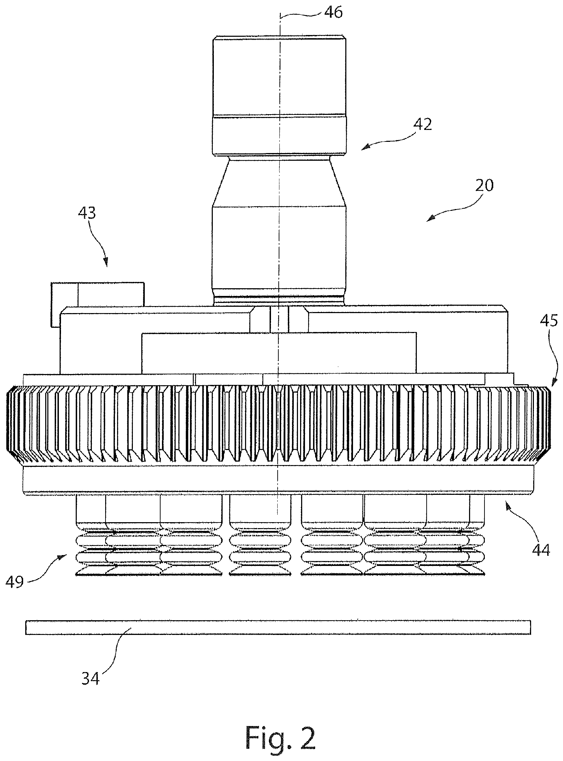

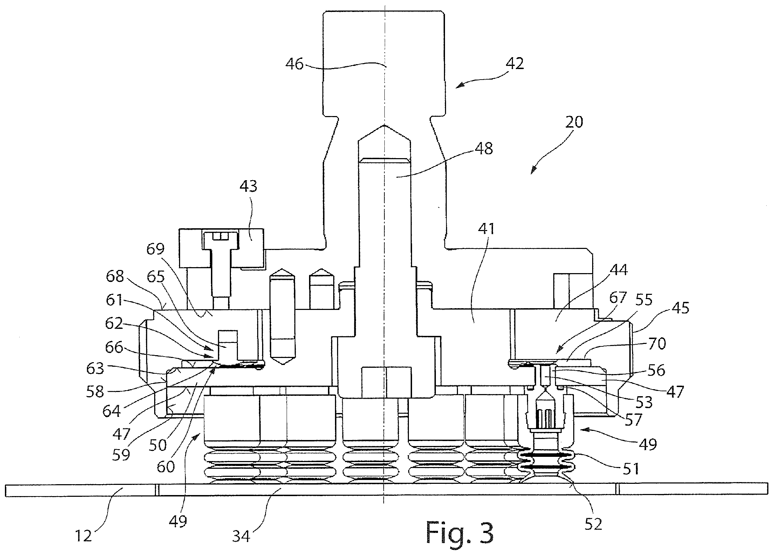

In Figur 2 ist eine schematische Seitenansicht einer ersten Ausführungsform eines erfindungsgemäßen Werkzeugs 20 dargestellt. Die Figur 3 zeigt eine Schnittansicht des Werkzeugs 20 gemäß Figur 2.

Das Werkzeug 20 umfasst einen Werkzeuggrundkörper 41, an welchem ein Einspannzapfen 42 fest angeordnet ist. Durch den Einspannzapfen 42 wird das Werkzeug 20 in der Oberwerkzeugaufnahme 24 oder Unterwerkzeugaufnahme 23 gehalten. An diesem Einspannzapfen 42 kann ein Positionierelement 43 vorgesehen sein, um das Werkzeug 20 zur Hubachse 28 in einer definiert ausgerichteten Lage beziehungsweise Position aufzunehmen. Zwischen dem Einspannzapfen 42 und dem Werkzeuggrundkörper 41 ist ein Indexierrad 44 vorgesehen, welches um die Längsmittelachse 46 drehbar an dem Werkzeuggrundkörper 41 gelagert ist. An einem Außenumfang des Indexierrades 44 ist eine Außenverzahnung 45 vorgesehen, durch welche das Indexierrad drehbar am Werkzeuggrundkörper 41 angetrieben wird.

Der Werkzeuggrundkörper 41 weist einen dem Einspannzapfen 42 gegenüberliegenden Aufnahmebereich 47 auf. Dieser weist in Richtung auf das plattenförmige Material 12, 13 beziehungsweise auf ein daraus herzustellendes Werkstück 34. An diesem Aufnahmebereich 47 ist zumindest ein Saugelement 49 vorgesehen. Dieser Aufnahmebereich 47 ist ringförmig ausgebildet. Innerhalb des ringförmigen Aufnahmebereiches 47 ist ein Befestigungsmittel 48, insbesondere eine Befestigungsschraube, vorgesehen, durch welche der Werkzeuggrundkörper 41 nach dem Positionieren des Indexierrades 44 auf dem Werkzeuggrundkörper 41 fest mit dem Einspannzapfen 42 verbunden ist. Der Werkzeuggrundkörper 41 weist eine umlaufende Schulter 50 auf, welche vorzugsweise scheibenförmig ausgebildet ist. Eine radiale Umfangsfläche 58 begrenzt den Werkzeuggrundkörper 41, insbesondere die Schulter 50. Durch diese radiale Umfangsfläche 58 wird das Indexierrad 44 mittels einer Innenumfangsfläche 59 radial geführt und zur Längsmittelachse 46 ausgerichtet. In axialer Richtung liegt eine Abstützfläche 60 des Indexierrades 44 auf einer Außenseite 66 der Schulter 50 auf. Diese Abstützfläche 60 ist benachbart zur Innenumfangsfläche 59 am Indexierrad 44 vorgesehen.

Der Abstützfläche 60 gegenüberliegend ist eine Führungsfläche 68 am Indexierrad 44 vorgesehen, welche einer Ringfläche 69 des Einspannzapfens 42 gegenüberliegt. Somit wird das Indexierrad 44 in axialer Richtung zur Längsmittelachse 46 zwischen der Ringfläche 69 des Einspannzapfens 42 und der Außenseite 66 des Werkzeuggrundkörpers 41 beziehungsweise der Schulter 50 am Werkzeuggrundkörper 41 gesichert. Zwischen der Schulter 50 am Werkzeuggrundkörper 41 und einem ringförmigen Befestigungsabschnitt 70 am Indexierrad 44 wird ein Freiraum 55 gebildet.

Das Saugelement 49 umfasst einen Saugnapf 51, der balgförmig ausgebildet ist und an seinem freien stirnseitigen Ende eine Anlagefläche 52, vorzugsweise ringförmige Anlagefläche, aufweist. Gegenüberliegend steht der Saugnapf 51 mit einem Fluidkanal 53 in Verbindung, der sich durch den Aufnahmebereich 47 im Werkzeuggrundkörper 41 erstreckt, bis dieser in einen Freiraum 55 mündet. Der Fluidkanal 53 ist in einem Befestigungsabschnitt 56 des Saugelementes 49 vorgesehen. Dieser Befestigungsabschnitt 56 ist vorzugsweise lösbar mit dem Aufnahmebereich 47 verbunden. Beispielsweise kann eine Schraubverbindung vorgesehen sein. Ebenso kann eine Rast-, Clips-, Bajonett- oder Klemmverbindung eingesetzt werden. Zur abdichtenden Anordnung zwischen dem Aufnahmebereich 47 und dem Befestigungsabschnitt 56 ist bevorzugt ein Dichtelement 57 vorgesehen, um eine Schnittstelle oder Anschlussstelle zwischen dem Saugelement 49 und dem Aufnahmebereich 47 abzudichten.

Der Saugnapf 51 ist aus einem gummi-elastischen Material ausgebildet. Bevorzugt ist dieser an dem Befestigungsabschnitt 56 aufgesteckt. Der Saugnapf 51 ist zum Fluidkanal 53 in der Länge veränderbar. Dadurch wird auch ein Saugnapfvolumen verändert. Es ist auch möglich, die Saugelemente 49 axial federnd gelagert aufzunehmen, um den Hub der Saugelemente 49 zu vergrößern.

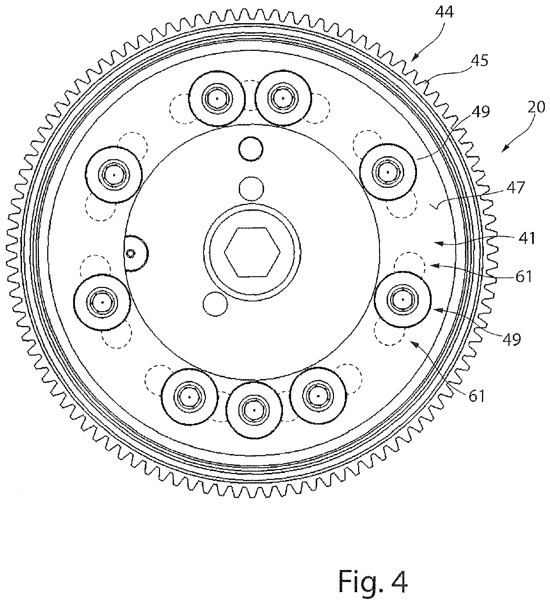

Bei der Ausführungsform gemäß den Figuren 2 und 3 sind mehrere Saugelemente 49 vorgesehen, die vorzugsweise auf demselben Umfangskreis verteilt am Aufnahmebereich 47 befestigt sind. Die Saugelemente 49 können gleichmäßig über den Umfang verteilt angeordnet sein. Alternativ können diese auch in einzelnen Gruppen zueinander oder mit voneinander abweichenden Abständen zueinander angeordnet sein, wie dies beispielsweise aus einer Ansicht von unten auf das Werkzeug 20 gemäß Figur 4 hervorgeht.

An dem Indexierrad 44 sind zur Ansteuerung der Saugelemente 49 Steuerglieder 61 vorgesehen. Diese Steuerglieder 61 sind in den Freiraum 55 weisend ausgerichtet an dem Indexierrad 44 befestigt. Das Steuerglied 61 ist bevorzugt als ein Verschluss 62 zum Verschließen des Fluidkanals 53 des Saugelementes 49 ausgebildet. Der Verschluss 62 ist bevorzugt pilzkopfförmig ausgebildet, so dass an dem Verschluss 62 eine Schließfläche 63 vorgesehen ist, welche im Durchmesser wenigstens dem Durchmesser des Fluidkanals 53 entspricht. Benachbart zur Schließfläche 63 ist eine Auflaufschräge 64 vorgesehen, die vorzugsweise rundumlaufend um die Schließfläche 63 ausgebildet ist. An dem Verschluss 62 ist ein Befestigungsabschnitt 65 vorgesehen, durch welchen vorteilhafterweise der Verschluss 62 in einer Bohrung im ringförmigen Befestigungsabschnitt 70 des Indexierrades 44 befestigt ist.

Der Verschluss 62 ist bevorzugt aus einem elastischen Material ausgebildet. Alternativ können die Schließfläche 63 und die Anlaufschräge 64 aus einem Dichtungsmaterial, insbesondere einem gummi-elastischen Material, einem thermoplastischen oder duroplastischen Kunststoffmaterial, und der Befestigungsabschnitt 65 aus einem weiteren Material ausgebildet sein.

Durch die Ausbildung der Schließfläche 63 und der diese umgebende Auflaufschräge 64, die im Durchmesser größer sind als der Befestigungsabschnitt 65, kann der Verschluss 62 in einfacher Weise in die Bohrung am Indexierrad 44 eingesetzt werden. Gleichzeitig ist dadurch ermöglicht, dass die Höhe der Schließfläche 63 in einer definierten Lage in dem Freiraum 55 hervorsteht. Dadurch kann sichergestellt sein, dass bei einer Drehbewegung des Indexierrades 44 ein sicheres Aufgleiten des Verschlusses 62 auf den Befestigungsabschnitt 56 erfolgt, um den Fluidkanal 53 mit der Schließfläche 63 zu schließen. Durch die axiale Fixierung des Indexierrades 44 zwischen dem Einspannzapfen 42 und dem Werkzeuggrundkörper 41 ist auch sichergestellt, dass die Schließfläche 63 des Verschlusses 62 abdichtend an dem Fluidkanal 53 des Saugelementes 49 anliegt.

In Figur 3 und Figur 4 ist das Werkzeug 20 bezüglich den Saugelementen 49 in einer Ruheposition 67 angeordnet. Die Steuerglieder 61 am Indexierrad 44 sind somit benachbart zum Fluidkanal 53 des Saugelementes 49 angeordnet. Dies geht beispielsweise durch die Ansicht von unten auf das Werkzeug 20 gemäß Figur 4 hervor. In dieser Ruheposition 67 ist der Fluidkanal 53 des Saugelements 49 geöffnet, das heißt, dass in dem Saugelement 49 kein Unterdruck aufgebaut werden kann.

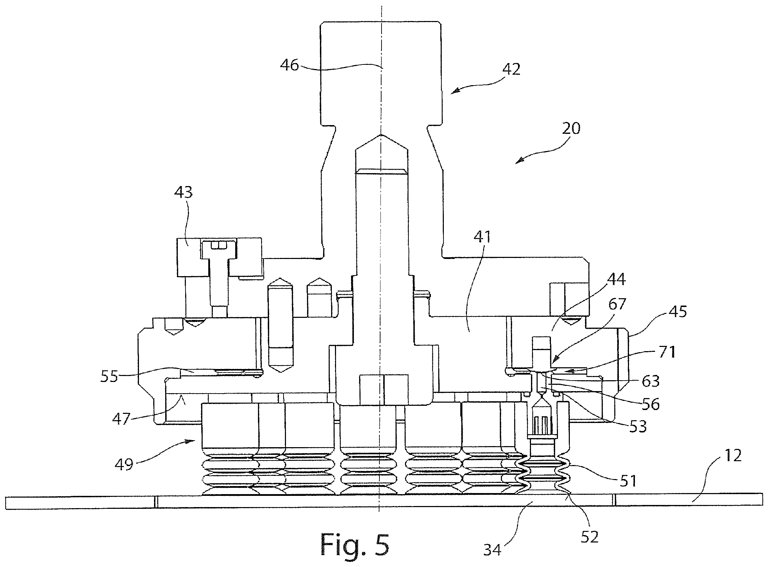

In Figur 5 ist eine schematische Schnittansicht des Werkzeugs 20 gemäß Figur 2 dargestellt, bei welcher die Saugelemente 49 in eine Aktivposition 71 übergeführt beziehungsweise angeordnet sind. Durch eine angesteuerte Drehbewegung des Werkzeuggrundkörpers 41 gegenüber einem stillstehend gehaltenen Indexierrad 44 wird das Steuerglied 61 zum Saugelement 49 positioniert. Alternativ könnte auch das Indexierrad 44 gegenüber einem stillstehend gehaltenen Werkzeuggrundkörper 41 gedreht werden. Die Auflaufschräge 64 des Verschlusses 62 gleitet auf den Befestigungsabschnitt 56 des Saugelementes 49 auf. Zum Verschließen des Fluidkanals 53 deckt die Schließfläche 63 des Verschlusses 62 den Querschnitt des Fluidkanals 53 vollständig ab. Diese Aktivposition 71 ist in Figur 5 dargestellt.

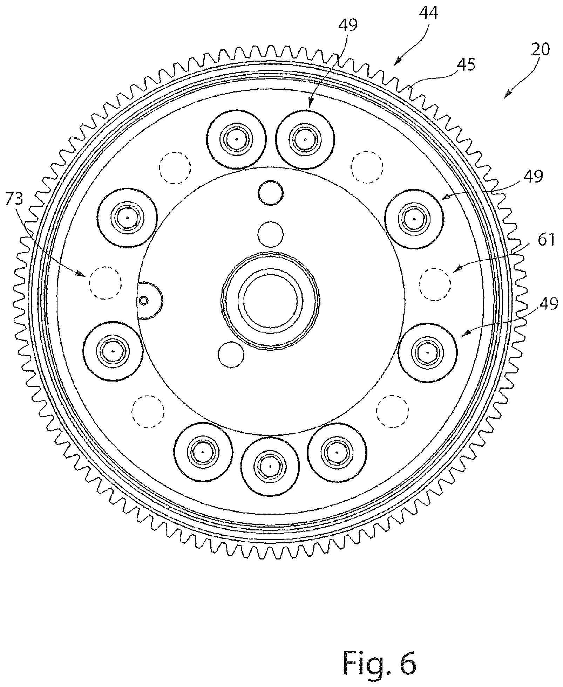

Figur 6 zeigt eine Ansicht von unten auf das Werkzeug 20 gemäß Figur 5. Daraus ist zu entnehmen, dass in dem Aufnahmebereich 47 nicht durch Saugelemente 49 besetzte Positionen 73 vorgesehen sind, in welchen jedoch vorteilhafterweise jeweils ein Steuerglied 61 angeordnet ist.

Die an dem Aufnahmebereich 47 angeordneten Saugelemente 49 sind in der Aktivposition 71, das heißt, dass der Fluidkanal 53 des jeweiligen Saugelementes 49 geschlossen ist.

Sobald nun das Werkzeug 20 auf das plattenförmige Material 12, 13 beziehungsweise das darin bereits hergestellte Werkstück 34 zubewegt wird, kommt zunächst die Anlagefläche 52 der Saugelemente 49 an der Oberfläche des Werkstücks 34 zur Anlage.

Anschließend wird das Saugelement 49, insbesondere der Saugnapf 51, komprimiert, so dass Luft aus dem Saugnapf 51 entweicht. Bei einem anschließenden Anheben des Werkzeugs 20 gegenüber dem Werkstück 34 tritt eine Längung des Saugelementes 49, insbesondere des Saugnapfes 51, ein, wodurch sich das Saugelement 49 an dem Werkstück 34 festsaugt. Es entsteht ein Unterdruck im Saugelement 49, wodurch die Haltekraft zum Werkstück 34 erzeugt ist.

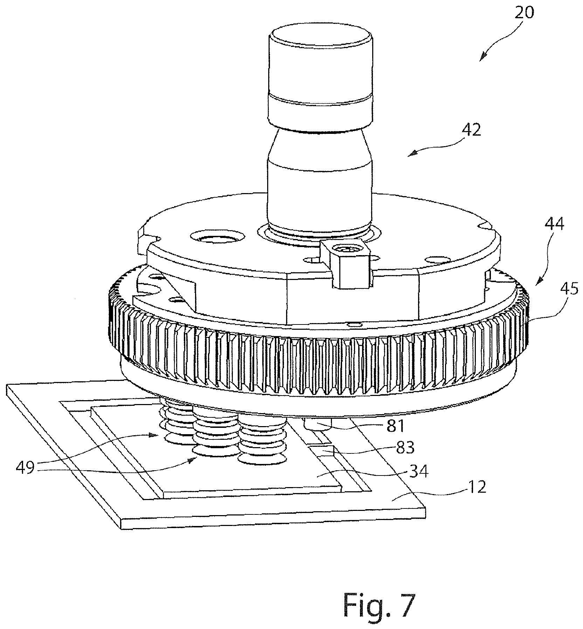

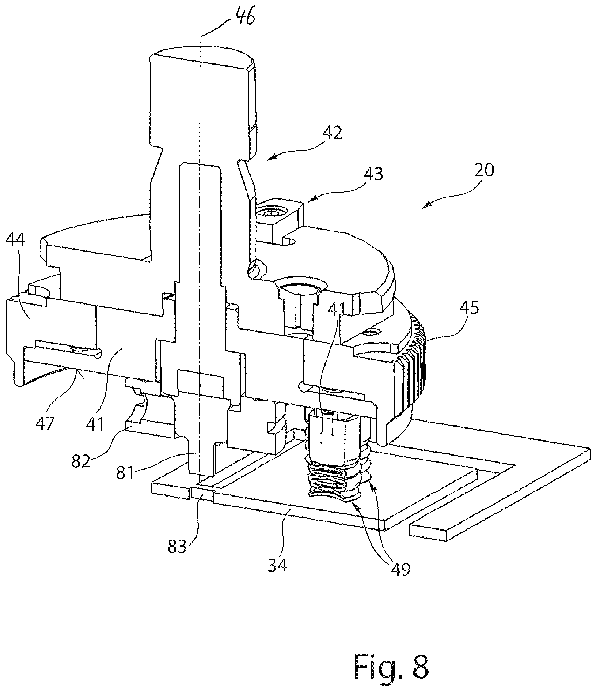

In Figur 7 ist eine perspektivische Ansicht einer alternativen Ausführungsform des Werkzeugs 20 zu Figur 2 dargestellt. Die Figur 8 zeigt eine schematische Schnittansicht des Werkzeugs 20.

Bei diesem Werkzeug 20 sind im Aufnahmebereich 47 nur innerhalb eines Teilkreises Saugelemente 49 angeordnet. Die Anzahl der Saugelemente 49 und/oder die Positionierung am Aufnahmebereich 47 können an die Geometrie des Werkstücks 34 angepasst sein. Beispielsweise sind vier Saugelement 49 aufeinanderfolgend angeordnet und innerhalb eines Viertelkreises am Aufnahmebereich 47 positioniert. Dadurch kann eine kleine Handhabungsfläche durch die einzelnen Saugelemente 49 gebildet werden, um kleine Werkstücke 34 zu handhaben.

Bei diesem Werkzeug 20 ist des Weiteren im Aufnahmebereich 47 vorzugsweise zentral zur Längsmittelachse 46 ein Bearbeitungswerkzeug 81 vorgesehen. Dieses Werkzeug 20 gemäß den Figuren 7 und 8 ermöglicht somit sowohl eine Bearbeitung des plattenförmigen Materials 12, 13 als auch die Handhabung des plattenförmigen Materials 12, 13 oder daraus gebildete Werkstücke 34.

Das Bearbeitungswerkzeug 81 kann beispielsweise als ein Stanzstempel ausgebildet sein, der mittels eines Befestigungselementes 82, insbesondere Befestigungsflansch, zum Werkzeuggrundkörper 41 befestigt ist. Dieses Bearbeitungswerkzeug 81 kann in der Größe und der Geometrie der Bearbeitungsfläche an die Bearbeitungsaufgabe angepasst werden.

In dem Ausführungsbeispiel ist das plattenförmige Material 12 nur ausschnittsweise dargestellt. Durch eine Stanzbearbeitung mittels eines Werkzeuges 19 wurde in einem nicht näher dargestellten und beschriebenen Arbeitsvorgang ein beispielsweise quadratisches Werkstück 34 aus dem plattenförmigen Material 12 ausgestanzt, wobei eine Stegverbindung 83 beziehungsweise ein sogenannter Microjoint belassen ist, durch welchen das Werkstück 34 innerhalb des plattenförmigen Materials 12 oder des dann gebildeten Restgitters gehalten und positioniert ist.

Zur Entnahme des Werkstückes 34 wird das Werkzeug 20 derart zum zu entnehmenden Werkstück 34 positioniert, dass das Bearbeitungswerkzeug 81 oberhalb der Stegverbindung 83 und die Saugelemente 49 oberhalb des zu entnehmenden Werkstückes 34 liegen. Bei einer darauffolgenden Absenkbewegung des Werkzeuges 20 auf das Werkstück 34 erfolgt eine Trennung der Stegverbindung 83 zum plattenförmigen Material 12. Gleichzeitig findet eine Komprimierung der Saugelemente 49 statt. Ist der Hub der Saugelemente 49 nicht ausreichend, können die Sauger axial federnd gelagert aufgenommen werden. Das Indexierrad 44 kann vor, während oder nach dem Bearbeitungsvorgang, insbesondere Stanzvorgang, gedreht werden, um die Saugelemente 49 in eine Aktivposition 71 überzuführen. Alternativ kann vor dem Aufsetzen der Saugelemente 49 auf dem Werkstück 34 der Werkzeuggrundkörper 41 um die Längsmittelachse 46 gedreht und das Indexierrad 44 in einer ruhenden oder stillstehenden Position 67 gehalten werden, um die Saugelemente 49 in eine Aktivposition 71 überzuführen. Anschließend erfolgen die Absenkbewegung und eine Komprimierung der Saugelemente 49 auf dem Werkstück 34. Anschließend erfolgt eine Abhebebewegung des Werkzeugs 20, wodurch sich die Saugelemente 49 an dem Werkstück 34 festsaugen. Anschließend kann bei einer Bearbeitungsmaschine gemäß Figur 1 das Restgitter mit der Greifvorrichtung 32 verfahren werden, um darauffolgend das Werkstück 34 abzuwerfen und über das Tischsegment 35 abzuführen. Hierzu wird der Werkzeuggrundkörper 41 oder das Indexierrad 44 oder beides gedreht, so dass die Saugelemente 49 in eine Ruheposition 67 übergehen. Es findet eine Belüftung der Saugelemente 49 statt beziehungsweise der Unterdruck oder das erzeugte Vakuum wird aufgehoben, wodurch das Werkstück 34 sich selbständig von den Saugelementen 49 löst. Bei einer alternativen Ausgestaltung der Werkstückbearbeitungsmaschine 11 kann das durch das zumindest eine Saugelement 49 angehobene Werkstück 34 relativ zum plattenförmigen Material 12, 13 verfahren werden, um dieses in eine Entladestation überzuführen. Durch Drehen des Indexierrades 44 und/oder des Werkzeuggrundkörpers 41 zum Überführen des zumindest einen Saugelements 49 in die Ruheposition 67 kann das Werkstück 34 auch abgeworfen werden.

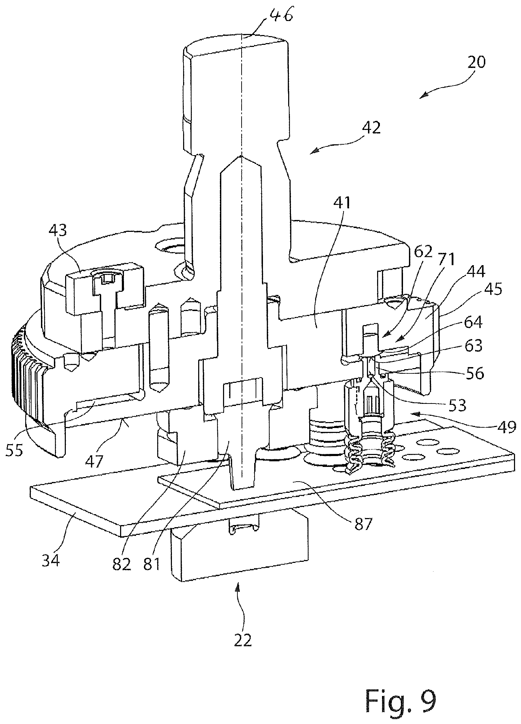

In Figur 9 ist eine alternative Anwendung und Handhabung des Werkzeuges 20 zu den Figuren 7 und 8 dargestellt. Die Figur 9 zeigt, dass das Werkzeug 20 in einem vorausgehenden Handhabungsprozess mittels den Saugelementen 49 ein Werkstück 34 greift und zu einem zweiten Werkstück 87 positioniert wird, um darauffolgend eine Bearbeitung des ersten Werkstücks 34 und zweiten Werkstücks 87 mit dem Bearbeitungswerkzeug 81 durchzuführen. Schematisch ist passend zum Bearbeitungswerkzeug 81 ein Unterwerkzeug 22 dargestellt. Beispielsweise kann eine gemeinsame Bohrung oder Durchbrechung in das erste Werkstück 34 und zweite Werkstück 87 eingebracht werden. Alternativ kann auch ein Clinch-Prozess vorgesehen sein, um das zweite Werkstück 87 mit dem ersten Werkstück 34 zu verbinden.

Sofern die beiden miteinander verbundenen Werkstücke 34 und 87 im Gesamtgewicht geringer als die Saugkraft der Saugelemente 49 sind, können die beiden miteinander verbundenen Werkstücke 87, 34 gemeinsam weitertransportiert werden. Sofern die Gewichtskraft der beiden Werkstücke 87, 34 größer als die Saugkraft der Saugelemente 49 ist, kann mittels einer weiteren Handhabungseinrichtung eine Handhabung der beiden Werkstücke 87, 34 angesteuert werden.

Die schematische Darstellung des zweiten Werkstücks 87 auf dem ersten Werkstück 34 kann beispielsweise dann vorgesehen sein, wenn ein in Teilbereichen verstärktes Werkstück 34 ausgebildet wird. Dies kann durch zwei gleiche oder ungleiche plattenförmige Materialien 12, 13 miteinander erfolgen.

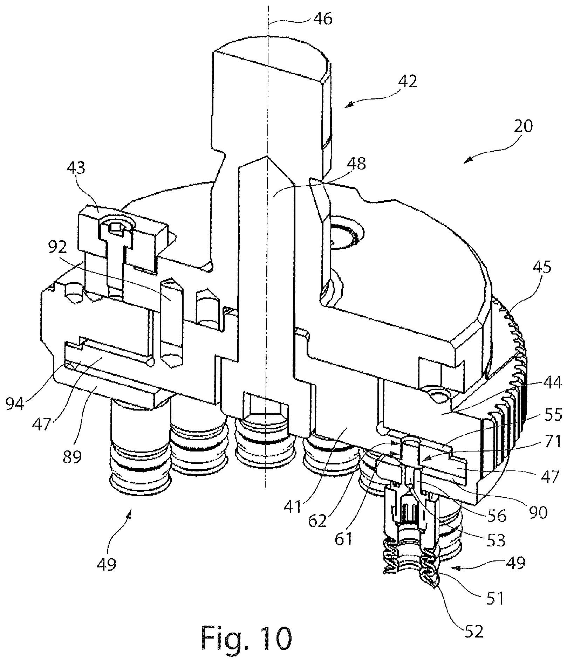

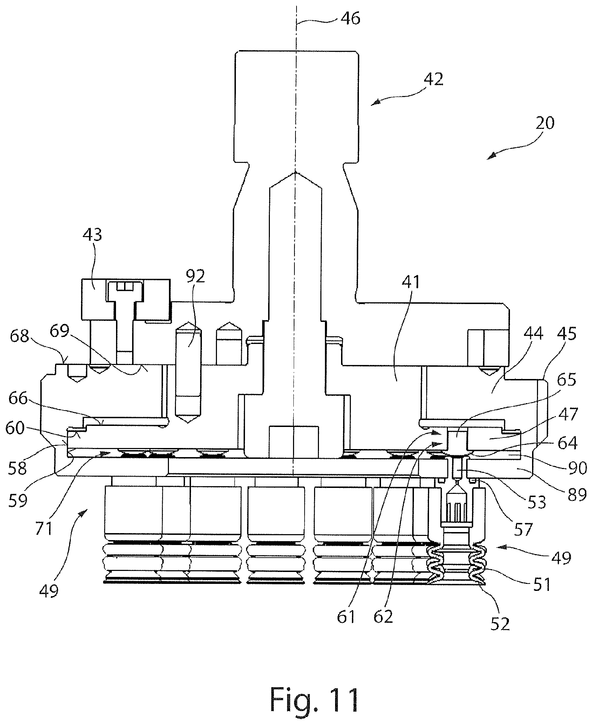

In Figur 10 ist eine perspektivische Schnittansicht einer alternativen Ausführungsform des Werkzeugs 20 zu Figur 2 dargestellt. Die Figur 11 zeigt eine schematische Seitenansicht der Ausführungsform des Werkzeugs 20 gemäß Figur 10.

Diese Ausführungsform des Werkzeugs 20 entspricht dem in den Figuren 2 bis 6. Diese Ausführungsform des Werkzeugs 20 gemäß den Figuren 10 und 11 weicht in der Ausgestaltung des Indexierrades 44 von der Ausführungsform in den Figuren 2 bis 6 ab. Im Übrigen wird auf die Beschreibung in den Figuren 2 bis 6 vollumfänglich Bezug genommen.

Das Indexierrad 44 gemäß den Figuren 10 und 11 weist einen Haltebereich 89 auf, der scheiben- oder ringförmig ausgebildet ist. Dieser Haltebereich 89 erstreckt sich von einem Endabschnitt einer Innenumfangsfläche 59 radial zur Längsmittelachse 46. Dadurch wird ein U-förmiger Aufnahmeraum 90 geschaffen, innerhalb dem sich der Aufnahmebereich 47 am Werkstückgrundkörper 41 erstreckt.

Das Indexierrad 44 ist zwischen dem Einspannzapfen 42 und dem Werkzeuggrundkörper 41 radial drehbar um die Längsmittelachse 46 geführt. Für die Außenverzahnung 45 kann das Indexierrad 44 relativ stillstehend zum Werkzeuggrundkörper 41 gehalten sein, der beispielsweise durch das Positionierelement 43 bezüglich der radialen Ausrichtung drehbar zur Längsmittelachse 46 ansteuerbar ist. Über einen Zentrierzapfen 92 ist der Einspannzapfen 42 zum Werkzeuggrundkörper 41 drehfest verbunden.

An dem Indexierrad 44, insbesondere am Haltebereich 89 des Indexierrades 44, ist das zumindest eine Saugelement 49 aufgenommen. Dabei kann der Befestigungsabschnitt 56, wie dies zu Figur 3 am Beispiel des Aufnahmebereichs 47 beschrieben ist, analog am Haltebereich 89 angeordnet und befestigt sein.

Zur Bildung des Verschlusses 62 ist an dem Aufnahmebereich 47 des Werkzeuggrundkörpers 41 das Steuerglied 61 angeordnet. Hierfür gilt Analoges für die Ausgestaltung des Steuergliedes 61 und deren Befestigung am Indexierrad 44 gemäß Figur 3 für die Befestigung am Aufnahmebereich 47 des Werkzeuggrundkörpers 41.

Das Steuerglied 61 wird bezüglich dem Abstand zum Befestigungsabschnitt 56 dahingehend abgestimmt, dass dies dem Abstand einer Außenseite 94 des Haltebereichs 89 zur gegenüberliegenden Seite des Aufnahmebereichs 47 des Werkzeuggrundkörpers 41 entspricht.

Bei dieser Ausführungsform des Werkzeugs 20 kann ergänzend zur Handhabung des Werkstücks 34 mit dem in den Figuren 2 bis 6 beschriebenen Werkzeug 20 das Werkzeug 20 mit den Saugelementen 49 in einer Ruheposition 67 auf das Werkstück 34 aufgesetzt und anschließend die Saugelemente 49 beziehungsweise der Saugnapf 51 komprimiert werden. Danach erfolgt eine Ansteuerung einer Drehbewegung des Werkzeuggrundkörpers 41, so dass die Steuerglieder 61 in eine Schließposition zu den Fluidkanälen 53 der Saugelemente 49 übergeführt werden. Die Saugelemente 49 sind dann in einer Aktivposition 71. Beim anschließenden Abheben des Werkzeuges 20 gegenüber dem Werkstück 34 findet wiederum eine Längung der Saugelemente 49 und ein Festsaugen an dem Werkstück 34 statt.

Alternativ kann sowohl vor oder während dem Aufsetzen als auch nach dem Aufsetzen der Saugelemente 49 auf dem Werkstück 34 der Werkzeuggrundkörper 41 durch eine Drehbewegung gegenüber dem stillstehenden Indexierrad 44 angesteuert werden, um die Saugelemente 49 in eine Aktivposition 71 überzuführen. Auch kann vor oder während dem Komprimieren der Saugelemente 49 eine drehbare Ansteuerung des Werkzeuggrundkörpers 41 und ein Überführen der Saugelemente 49 aus der Ruheposition 67 in die Aktivposition 71 erfolgen.

Bei der Ausführungsform des Werkzeugs 20 gemäß den Figuren 10 und 11 kann ebenso ein feststehend an dem Werkzeuggrundkörper 41 angeordnetes Bearbeitungswerkzeug 81 vorgesehen sein. Insoweit gelten bezüglich der Anbringung des Bearbeitungswerkzeuges 81 an dem Werkzeuggrundkörper 41 die Ausführungen in den Figuren 7 bis 9. Ebenso bezüglich der Arbeitsweise. Ergänzend wird beim vorliegenden Werkzeug 20 gemäß den Figuren 10 und 11 die Arbeitsweise noch dahingehend modifiziert, dass erst beim Aufsetzen der Saugelemente 49 auf dem Werkstück 34 oder nach dem Aufsetzen und während dem Komprimieren der Saugelemente 49 noch eine drehbare Ansteuerung des Werkzeuggrundkörpers 41 ermöglicht ist. In Abhängigkeit des Maschinenkonzeptes der Werkstückbearbeitungsmaschine 11 kann sowohl die erste Ausführungsform des Werkzeugs 20 gemäß den Figuren 2 bis 6 als auch die zweite Ausführungsform des Werkzeugs 20 gemäß den Figuren 10 und 11 eingesetzt werden.

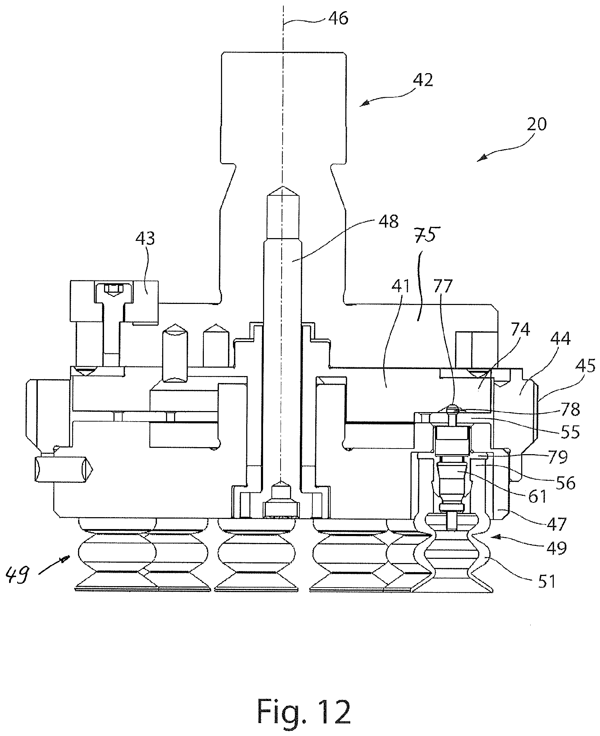

In Figur 12 ist eine perspektivische Schnittansicht einer alternativen Ausführungsform des Werkzeugs 20 zu Figur 2 dargestellt. Diese Ausführungsform des Werkzeugs 20 entspricht grundsätzlich dem in den Figuren 2 bis 6. Diese Ausführungsform gemäß Figur 12 des Werkzeugs 20 weicht in der Ausgestaltung des Steuergliedes 61 und dessen Ansteuerung von den Figuren 2 bis 6 ab. Im Übrigen wird auf die Beschreibung in den Figuren 2 bis 6 vollumfänglich Bezug genommen.

Bei dieser Ausführungsform des Werkzeugs 20 ist zwischen dem Werkzeuggrundkörper 41 und dem Einspannzapfen 42 eine Steuerscheibe 74 vorgesehen. Diese Steuerscheibe 74 wird am Außenumfang durch das Indexierrad 44 umgeben. Diese Steuerscheibe 74 kann drehfest mit dem Indexierrad 44 verbunden oder einteilig mit dem Indexierrad 44 ausgebildet sein. Alternativ kann diese Steuerscheibe 74 auch drehfest mit dem Einspannzapfen 42 beziehungsweise dessen scheibenförmigen Abschnitts 75 drehfest verbunden sein.

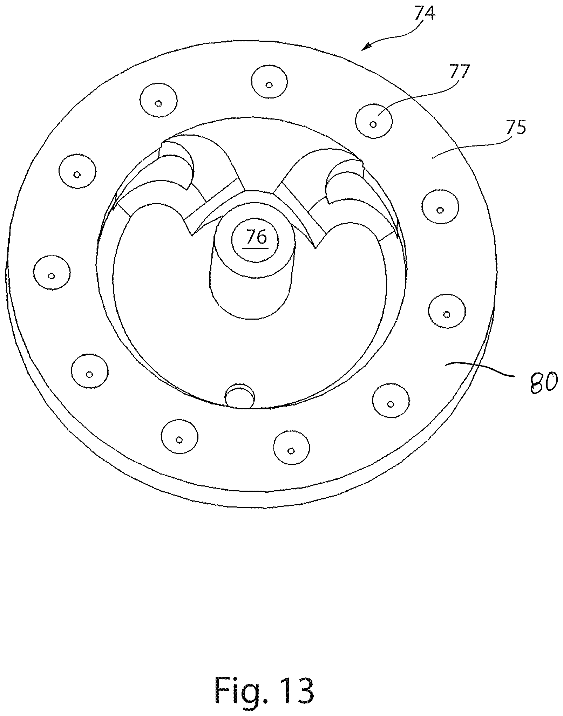

Diese Steuerscheibe 74 ist in einer perspektivischen Ansicht von unten in Figur 13 dargestellt. In einer zentralen Öffnung 76 ist diese Steuerscheibe 74 mit dem Befestigungsmittel 48 zum Einspannzapfen 42 ausgerichtet und fixiert. An einem außen umlaufenden Ringabschnitt 80 ist zumindest eine Steuerkurve 77 vorgesehen. Diese Steuerkurve 77 ist im Ausführungsbeispiel als kegelförmige Vertiefung dargestellt. Alternativ kann diese Steuerkurve 77 anstelle einer Vertiefung auch als eine Erhöhung ausgebildet sein, sodass diese Steuerkurve 77 gegenüber der Fläche des Ringabschnitts 80 erhaben ist. Bevorzugt ist entsprechend der Anzahl der Steuerglieder 61 eine Anzahl von Steuerkurven 77 vorgesehen.

Bei dem Werkzeug 20 gemäß Figur 12 ist das Steuerglied 61 als ein Ventil ausgebildet, welches in dem Fluidkanal 53 des Saugelementes 49 angeordnet ist. Bevorzugt ist das Steuerglied 61 in einem Zwischenstück 79 befestigt, welches am Außenumfang den Saugnapf 51 aufnimmt. Das Zwischenstück 79 ist bevorzugt mit dem Werkzeuggrundkörper 41 fest verbunden. Dieses als Ventil ausgebildete Steuerglied 61 ist in einer Grundposition bevorzugt geschlossen. Somit ist in dieser Grundposition des Ventils das Saugelement 49 in einer Aktivposition 71 vorgesehen. Das Steuerglied 61 weist einen Stößel 78 auf, der sich bevorzugt zumindest in den Freiraum 55 oder darüber hinaus erstreckt. Bevorzugt liegt der Stößel 78 in der Steuerkurve 77 beziehungsweise in der Vertiefung, wie dies in Figur 12 dargestellt ist. Das Steuerglied 61 nimmt in dieser Position die Aktivposition 71 ein und ist geschlossen.

Zum Passivieren des Saugelementes 49 wird eine Drehbewegung des Werkzeuggrundkörpers 41 vorzugsweise über das Indexierrad 44 relativ zum Einspannzapfen 42 angesteuert. Dabei wird der Stößel 78 aus der Steuerkurve 77, insbesondere der Vertiefung, herausgeführt und liegt an dem Ringabschnitt 80 zwischen zwei benachbarten Steuerkurven 77 an. Der Stößel 78 taucht in das Ventil ein und öffnet das Ventil. Das Steuerglied 61 ist geöffnet und somit passiv. Bei einer weiteren Drehung beziehungsweise einer Rückdrehung kann das Steuerglied 61 wieder aktiviert werden.

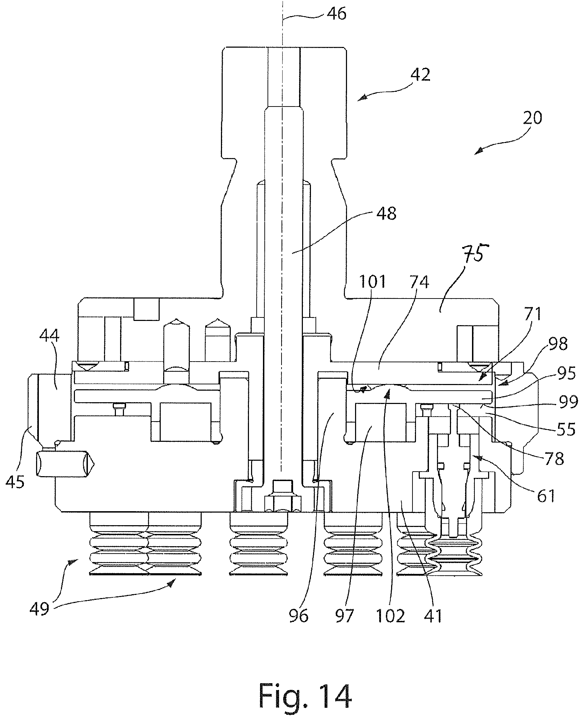

In Figur 14 ist eine alternative Ausführungsform des Werkzeugs 20 zu Figur 12 dargestellt. Diese Ausführungsform des Werkzeugs 20 gemäß Figur 14 weicht dahingehend von dem Werkzeug 20 gemäß Figur 12 ab, dass zwischen dem Werkzeuggrundkörper 41 und der Steuerscheibe 74 eine Aktivierungsscheibe 95 vorgesehen ist, welche das Steuerglied 61 ansteuert. Im Übrigen gelten die Ausführungen zu den Figuren 2 bis 6 und den Figuren 12 bis 13.

Das Werkzeug 20 gemäß Figur 14 ist in einer Aktivposition 71 dargestellt. Die Aktivierungsscheibe 95 ist an einem Ringbund 96 des Werkzeuggrundkörpers 41 aufgenommen. Die Aktivierungsscheibe 95 ist entlang dem Ringbund 96 in axialer Richtung zur Längsmittelachse 46 des Werkzeugs 20 mit einer Hubbewegung durch die Steuerscheibe 74 verfahrbar aufgenommen. Zwischen dem Werkzeuggrundkörper 41 und der Aktivierungsscheibe 95 ist ein elastisch nachgiebiges Rückstellelement 97 vorgesehen, welches die Aktivierungsscheibe 95 in einer Ausgangsposition 98 gemäß Figur 14 anordnet. Die Aktivierungsscheibe 95 weist eine ringförmige Steuerfläche 99 auf, an welcher der Stößel 78 des als Ventil ausgebildeten Steuergliedes 61 anliegt. Alternativ kann diese Aktivierungsscheibe 95 eine Steuerkurve 77 gemäß der Steuerscheibe 74 in Figur 13 aufweisen.

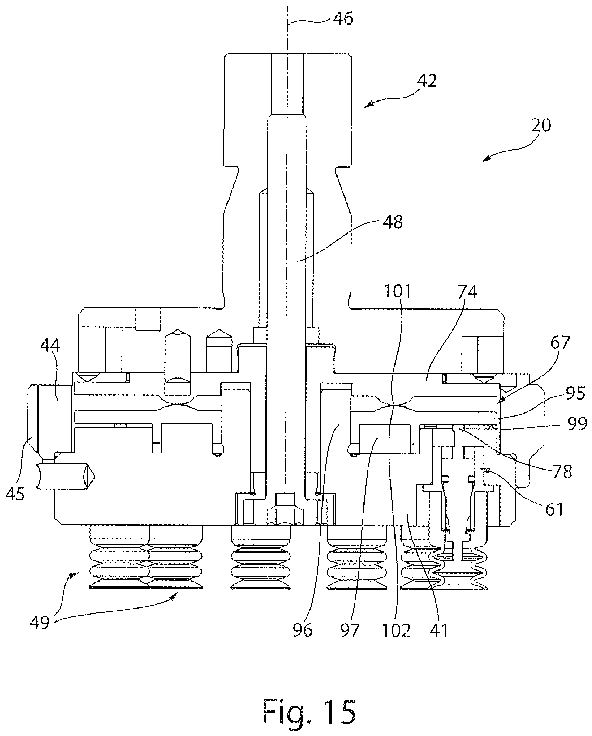

An der Steuerscheibe 74 gemäß der Ausführungsform in Figur 14 sind mehrere in Richtung auf die Aktivierungsscheibe 95 ausgerichtete erste Erhöhungen 101 vorgesehen, welche mit an der Aktivierungsscheibe 95 angeordneten zweiten Erhöhungen 102 auf einem gemeinsamen Kreisumfang liegen. In der Aktivposition 71 sind die jeweiligen Erhöhungen 101, 102 auf Lücke zueinander positioniert. Durch eine Drehbewegung des Einspannzapfens 42 relativ zum Werkzeuggrundkörper 41 beziehungsweise Indexierrad 44 werden die Erhöhungen 101, 102 aufeinander zubewegt. Aufgrund deren halbkugelförmigen Ausgestaltung oder der daran angeordneten Auflaufschräge 64 können diese in eine Arbeitsposition übergeführt werden, wie diese in Figur 15 dargestellt ist. Die Erhöhung 101 der Steuerscheibe 74 liegt unmittelbar der zweiten Erhöhung 102 an der Aktivierungsscheibe 95 gegenüber. Das Rückstellelement 97 ist zusammengepresst. Der Stößel 78 taucht in das Ventil ein, wodurch das Steuerglied 61 geöffnet ist. Das Saugelement 49 ist damit belüftet, also passiv.

Diese Ausführungsform weist den Vorteil auf, dass die Ansteuerung des Steuergliedes 61, insbesondere des Stößels 78, ausschließlich durch eine auf den Stößel 78 wirkende Axialbewegung erfolgt. Dadurch wird eine Ansteuerung frei von Querkräften ermöglicht.

## Patentansprüche

1. Werkzeug zumindest zum Handhaben von Werkstücken (34, 87) in einer Bearbeitungsmaschine (11), mit einem Werkzeuggrundkörper (41), mit einem an dem Werkzeuggrundkörper (41) fest angeordneten Einspannzapfen (42) und mit einem zwischen dem Einspannzapfen (42) und dem Werkzeuggrundkörper (41) drehbar angeordneten Indexierrad (44), die relativ zueinander bewegbar sind, **dadurch gekennzeichnet, dass** an dem Werkzeuggrundkörper (41) oder dem Indexierrad (44) zumindest ein Saugelement (49) vorgesehen ist, in welches ein Fluidkanal (53) mündet und dass das zumindest eine Saugelement (49) mit dem Indexierrad (44) oder dem Werkzeuggrundkörper (41) in eine Aktivposition (71) überführbar ist, in der der Fluidkanal (53) geschlossen ist und durch Längung des zumindest einen Saugelementes (49) das zumindest eine Saugelement (49) sich an dem Werkstück (34, 87) festsaugt und dass das zumindest eine Saugelement (49) durch das Indexierrad (44) oder den Werkzeuggrundkörper (41) in eine Ruheposition (67) überführbar ist, in welcher der Fluidkanal (53) geöffnet ist.

2. Werkzeug nach Anspruch 1, **dadurch gekennzeichnet, dass** der Fluidkanal (53) des zumindest einen Saugelementes (49) in Richtung auf das Indexierrad (44) oder den Werkzeuggrundkörper (41) ausgerichtet ist.

3. Werkzeug nach Anspruch 1 oder 2, **dadurch gekennzeichnet, dass** zum Aktivieren des zumindest einen Saugelements (49) das Indexierrad (44) oder der Werkzeuggrundkörper (41) durch eine Drehbewegung, vorzugsweise um eine Längsmittelachse (46) des Werkzeuggrundkörpers (41), gegenüber dem Werkzeuggrundkörper (41) oder des Indexierrades (44) in die Aktivposition (71) überführbar ist und durch eine weitere Drehbewegung des Indexierrades (44) oder des Werkzeuggrundkörpers (41) in dieselbe Drehrichtung oder in entgegengesetzter Drehrichtung in die Ruheposition (67) überführbar ist.

4. Werkzeug nach einem der vorhergehenden Ansprüche, **dadurch gekennzeichnet, dass** an dem Indexierrad (44) oder dem Werkzeuggrundkörper (41) zumindest ein Steuerglied (61) vorgesehen ist, welches zum Saugelement (49) weisend ausgerichtet ist sowie den Fluidkanal (53) öffnet und schließt, und vorzugsweise das Steuerglied (61) als ein Verschluss (62) mit einer Schließfläche (63) ausgebildet ist, welche den Fluidkanal (53) schließt und vorzugsweise benachbart zur Schließfläche eine umlaufende Auflaufschräge (64) vorgesehen ist.

5. Werkzeug nach einem der Ansprüche 1 bis 3, **dadurch gekennzeichnet, dass** an dem Indexierrad (44) oder dem Einspannzapfen (42) oder an dem Werkzeuggrundkörper (41) eine Steuerscheibe (74) vorgesehen ist, welche mit dem Indexierrad (44) oder dem Werkzeuggrundkörper (41) oder dem Einspannzapfen (42) drehfest verbunden ist und zumindest eine Steuerkurve (77) aufweist, welche zumindest ein in dem Saugelement (49) angeordnetes Steuerglied (61) öffnet und schließt.

6. Werkzeug nach Anspruch 5, **dadurch gekennzeichnet, dass** zwischen der Steuerscheibe (74) und dem Werkzeuggrundkörper (41) oder zwischen der Steuerscheibe (74) und dem Indexierrad (44) oder zwischen dem Einspannzapfen (42) und der Steuerscheibe (74) eine Aktivierungsscheibe (95) vorgesehen ist, welche bei einer Drehbewegung der Steuerscheibe (74) mit einer Hubbewegung längs der Längsmittelachse (46) des Werkzeuggrundkörpers (41) ansteuerbar ist und das zumindest eine in dem Saugelement (49) vorgesehene Steuerglied (61) öffnet und schließt.

7. Werkzeug nach Anspruch 5 oder 6, **dadurch gekennzeichnet, dass** das Steuerglied (61) als ein Ventil, insbesondere als ein Ventil mit einem betätigbaren Stößel (78), ausgebildet ist.

8. Werkzeug nach einem der vorhergehenden Ansprüche, **dadurch gekennzeichnet, dass** das zumindest eine Saugelement (49) durch eine lösbare Verbindung an dem Werkzeuggrundkörper (41) oder dem Indexierrad (44) vorgesehen ist.

9. Werkzeug nach einem der vorhergehenden Ansprüche, **dadurch gekennzeichnet, dass** das zumindest eine Saugelement (49) einen Befestigungsabschnitt (56) aufweist, welches den Fluidkanal (53) umfasst und an dem ein Saugnapf (51) angeordnet ist.

10. Werkzeug nach einem der vorhergehenden Ansprüche, **dadurch gekennzeichnet, dass** der zumindest eine Saugnapf (51) des Saugelements (49) balgförmig ausgebildet ist und eine ringförmige Anlagefläche (52) aufweist.

11. Werkzeug nach einem der vorhergehenden Ansprüche, **dadurch gekennzeichnet, dass** eine Mehrzahl von Saugelementen (49) vorgesehen ist, die vorzugsweise aufeinanderfolgend in einem Umfangskreis am Werkzeuggrundkörper (41) oder am Indexierrad (44) angeordnet sind oder dass zumindest ein ringförmiges Saugelement (49) vorgesehen ist, welches sich um einen Teilbereich eines Umfangskreises oder vollständig um 360° erstreckt.

12. Werkzeug nach einem der vorhergehenden Ansprüche, **dadurch gekennzeichnet, dass** benachbart zum zumindest einen Saugelement (49), vorzugsweise innerhalb des ringförmigen Saugelementes (49), oder der Mehrzahl der in einem Umfangskreis angeordneten Saugelemente (49) zumindest ein Bearbeitungswerkzeug (81) vorgesehen ist und das Bearbeitungswerkzeug (81) zumindest ein Stanz-Werkzeug und/oder ein Clinch-Werkzeug ist.

13. Werkzeug nach Anspruch 12, **dadurch gekennzeichnet, dass** das zumindest eine am Werkzeuggrundkörper (41) vorgesehene Bearbeitungswerkzeug (81) feststehend am Werkzeuggrundkörper (41) vorgesehen oder durch das Indexierrad (44) aktivierbar ist und vorzugsweise eine Stirnseite des Bearbeitungswerkzeuges (81) gegenüber einer Stirnseite des zumindest einen Saugelementes (49) zurückversetzt oder beide auf gleicher Höhe beabstandet zum Werkzeuggrundkörper (41) vorgesehen sind.

14. Verfahren zumindest zum Handhaben von Werkstücken (34, 87), insbesondere in einer Werkstückbearbeitungsmaschine (11), mit einem Werkzeug (20), welches einen Werkzeuggrundkörper (41) und einen an dem Werkzeuggrundkörper (41) fest angeordneten Einspannzapfen (42) sowie ein zwischen dem Einspannzapfen (42) und dem Werkzeuggrundkörper (41) angeordnetes Indexierrad (44) aufweist, wobei der Werkzeuggrundkörper (41) und das Indexierrad (44) relativ zueinander drehbar sind, **dadurch gekennzeichnet, dass**
- zumindest ein an einem Aufnahmebereich (47) des Werkzeuggrundkörpers (41) oder zumindest ein an einem Haltebereich (89) des Indexierrades (44) angeordnetes Saugelement (49) auf das zu handhabende Werkstück (34, 87) aufgesetzt und komprimiert wird,
- dass während oder nach dem Aufsetzen des zumindest einen Saugelementes (49) auf dem Werkstück (34, 87) das Indexierrad (44) oder der Werkzeuggrundkörper (41) gedreht und das zumindest eine Saugelement (49) in eine Aktivposition (71) übergeführt wird,
- dass durch Anheben des Werkzeuges (20) gegenüber dem Werkstück (34, 87) das zumindest eine Saugelement (49) gestreckt wird und sich an dem Werkstück (34, 87) festsaugt, und
- dass das von dem zumindest einen Saugelement (49) gehaltene Werkstück (34, 87) abgehoben wird.

15. Verfahren nach Anspruch 14, **dadurch gekennzeichnet, dass** an dem Aufnahmebereich (47) des Werkzeuggrundkörpers (41) zumindest ein Bearbeitungswerkzeug (81) benachbart zum zumindest einen an dem Werkzeuggrundkörper (41) oder dem Indexierrad (44) angeordneten Saugelement (49) vorgesehen ist und vor, während oder nach dem Aufsetzen und/oder Komprimieren des zumindest einen Saugelementes (49) auf dem Werkstück (34, 87) das Werkstück (34, 87) durch das Bearbeitungswerkzeug (81) bearbeitet wird.

## Claims

1. Tool at least for the handling of workpieces (34, 87) in a processing machine (11), having a basic tool body (41), having a clamping pin (42) that is fixedly arranged on the basic tool body (41) and having an indexing wheel (44) that is rotatably arranged between the clamping pin (42) and the basic tool body (41), which is movable relative to each other, **characterised in that** on the basic tool body (41) or the indexing wheel (44) at least one suction element (49) is provided, to which a fluid channel (53) leads, and **in that** the at least one suction element (49) is transferrable by means of the indexing wheel (44) or the basic tool body (41) into an active position (71), in which the fluid channel (53) is closed and, due to lengthening of the at least one suction element (49), the at least one suction element (49) is attached by suction to the workpiece (34, 87), and that the at least one suction element (49) is transferrable by means of the indexing wheel (44) or the basic tool body (41) into a rest position (67), in which the fluid channel (53) is open.

2. Tool according to claim 1, **characterised in that** the fluid channel (53) of the at least one suction element (49) is aligned in the direction towards the indexing wheel (44) or the basic tool body (41).

3. Tool according to claim 1 or 2, **characterised in that**, for activation of the at least one suction element (49), the indexing wheel (44) or the basic tool body (41) is transferrable by means of a rotary movement, preferably around a longitudinal centre axis (46) of the basic tool body (41), in relation to the basic tool body (41) or the indexing wheel (44) into the active position (71), and by means of a further rotary movement of the indexing wheel (44) or the basic tool body (41) in the same direction of rotation or in the opposite direction of rotation into the rest position (67).

4. Tool according to one of the proceeding claims, **characterised in that**, on the indexing wheel (44) or the basic tool body (41), at least one control element (61) is provided that is aligned facing towards the suction element (49) and opens and closes the fluid channel (53), and preferably the control element (61) is formed as a closure (62) having a closing surface (63) that closes the fluid channel (53), and **in that** a circumferential bevelled incline (64) is provided adjacent to the closing surface.

5. Tool according to claim 1 to 3, **characterised in that**, on the indexing wheel (44) or on the clamping pin (42) or on the basic tool body (41), a control disc is provided (74) that is non-rotatably connected to the indexing wheel (44) or the basic tool body (41) or the clamping pin (42) and that has at least one control curve (77), which opens and closes at least one control element (61) that is arranged in the suction element (49).

6. Tool according to claim 5, **characterised in that**, between the control disc (74) and the basic tool body (41) or between the control disc (74) and the indexing wheel (44) or between the clamping pin (42) and the control disc (74), an activation disc (95) is provided, which, under a rotary motion of the control disc (74), is actuatable by means of a lifting movement along the longitudinal central axis (46) of the basic tool body (41) and opens and closes the at least one control element (61) that is provided in the suction element (49).

7. Tool according to claim 5 or 6, **characterised in that** the control element (61) is formed as a valve, in particular as a valve having an operable plunger (78).

8. Tool according to one of the proceeding claims, **characterised in that** the at least one suction element (49) is provided by means of a detachable connection on the basic tool body (41) or the indexing wheel (44).

9. Tool according to one of the proceeding claims, **characterised in that** the at least one suction element (49) has a fastening section (56) that includes the fluid channel (53) and on which a suction cup (51) is arranged.

10. Tool according to one of the proceeding claims, **characterised in that** the at least one suction cup (51) of the suction element (49) is formed in a bellows shape and has a ring-shaped support surface (52).

11. Tool according to one of the proceeding claims, **characterised in that** a plurality of suction elements (49) is provided that are arranged preferably successively in a circumference on the basic tool body (41) or on the indexing wheel (44), or **in that** at least one ring-shaped suction element (49) is provided, which extends through a partial section of a circumference or completely through 360°.

12. Tool according to one of the proceeding claims, **characterised in that**, adjacent to the at least one suction element (49) preferably within the ring-shaped suction element (49), or the plurality of suction elements (49) arranged in a circumference, at least one processing tool (81) is provided and the processing tool (81) is at least a punching tool, and / or a clinching tool.

13. Tool according to claim 12, **characterised in that** the at least one processing tool (81) provided on the basic tool body (41) is provided fixedly on the basic tool body (41) or is activatable by means of the indexing wheel (44) and preferably one end face of the processing tool (81) is provided opposite one end face of the at least one suction element (49) either set back or with both at the same height at a distance from the basic tool body (41).

14. Method at least for the handling of workpieces (34, 87), in particular in a workpiece processing machine (11), having a tool (20) that has a basic tool body (41) and a clamping pin (42) that is fixedly arranged on the basic tool body (41) as well as an indexing wheel (44) that is arranged between the clamping pin (42) and the basic tool body (41), wherein the basic tool body (41) and the indexing wheel (44) are rotatable relative to each other, **characterized in**
- **that** at least one suction element (49) arranged in a receiving area (47) of the basic tool body (41) or at least one suction element (49) arranged in a holding area (89) of the indexing wheel (44) is placed and compressed on the workpiece (34, 87) that is to be handled,
- **that**, during or after the placing of the at least one suction element (49) on the workpiece (34, 87) the indexing wheel (44) or the basic tool body (41) is rotated and the at least one suction element (49) is transferred into an active position (71),
- **that**, by means of lifting the tool (20) in relation to the workpiece (34, 87), the at least one suction element (49) is stretched and is attached by suction to the workpiece (34, 87), and
- **that** the workpiece (34, 87) that is held by the at least one suction element (49) is lifted up.

15. Method as claimed in claim 14, **characterised in that**, in the receiving area (47) of the basic tool body (41), at least one processing tool (81) is provided adjacent to the at least one suction element (49) arranged on the basic tool body (41) or on the indexing wheel (44), and that before, during or after the placing or compression of the at least one suction element (49) on the workpiece (34, 87) or both, placing and compression of the at least one suction element (49) the workpiece (34, 87) is processed by means of the processing tool (81).

## Revendications

1. Outil servant au moins à manipuler des pièces à usiner (34, 87) dans une machine d'usinage (11), pourvu d'un corps de base d'outil (41), d'un nez de fixation (42) disposé de manière fixe sur le corps de base d'outil (41) et d'une roue d'indexage (44) disposée entre le nez de fixation (42) et le corps de base d'outil (41) de manière à pouvoir tourner, lesquelles pièces peuvent bouger entre elles, **caractérisé en ce que** sur ledit corps de base d'outil (41) ou ladite roue d'indexage (44) est prévu au moins un élément d'aspiration (49) dans lequel débouche un canal de fluide (53) et **en ce que** ledit au moins un élément d'aspiration (49) peut passer, grâce à la roue d'indexage (44) ou au corps de base d'outil (41), dans une position active (71) dans laquelle le canal de fluide (53) est fermé et que ledit au moins un élément d'aspiration (49), suite à l'allongement axial dudit au moins un élément d'aspiration (49), se fixe par aspiration sur la pièce à usiner (34, 87), et **en ce que** ledit au moins un élément d'aspiration (49) peut passer, grâce à la roue d'indexage (44) ou au corps de base d'outil (41), dans une position de repos (67) dans laquelle le canal de fluide (53) est ouvert.

2. Outil selon la revendication 1, **caractérisé en ce que** le canal de fluide (53) dudit au moins un élément d'aspiration (49) est orienté vers la roue d'indexage (44) ou vers le corps de base d'outil (41).

3. Outil selon la revendication 1 ou 2, **caractérisé en ce que**, pour activer ledit au moins un élément d'aspiration (49), la roue d'indexage (44) ou le corps de base d'outil (41) peut passer dans la position active (71) en effectuant un mouvement de rotation par rapport au corps de base d'outil (41) ou à la roue d'indexage (44), et ce de préférence autour d'un axe central longitudinal (46) du corps de base d'outil (41), et **en ce qu'**un nouveau mouvement de rotation de la roue d'indexage (44) ou du corps de base d'outil (41), dans le même sens de rotation ou dans le sens de rotation opposé, les fait passer dans la position de repos (67).

4. Outil selon l'une quelconque des revendications précédentes, **caractérisé en ce que** sur la roue d'indexage (44) ou le corps de base d'outil (41) est prévu au moins un organe de commande (61) qui est orienté de manière à être tourné vers l'élément d'aspiration (49) et lequel ouvre et ferme le canal de fluide (53), et **en ce que** l'organe de commande (61) est de préférence réalisé sous la forme d'un dispositif de fermeture (62) pourvu d'une surface de fermeture (63) qui ferme le canal de fluide (53) et **en ce qu'**un plan de réception incliné (64) circonférentiel est prévu de préférence de manière contiguë à la surface de fermeture.

5. Outil selon l'une quelconque des revendications 1 à 3, **caractérisé en ce que** sur la roue d'indexage (44) ou le nez de fixation (42) ou sur le corps de base d'outil (41) est prévu un disque de commande (74) qui est relié à la roue d'indexage (44) ou au corps de base d'outil (41) ou au nez de fixation (42) de manière être solidaire en rotation avec ceux-ci et qui présente au moins une came de commande (77) qui ouvre et ferme au moins un organe de commande (61) disposé dans l'élément d'aspiration (49).

6. Outil selon la revendication 5, **caractérisé en ce que** entre le disque de commande (74) et le corps de base d'outil (41), ou entre le disque de commande (74) et la roue d'indexage (44), ou entre le nez de fixation (42) et le disque de commande (74) est prévu un disque d'activation (95) qui peut être activé lors d'un mouvement de rotation du disque de commande (74) avec une course le long de l'axe central longitudinal (46) du corps de base d'outil (41) et qui ouvre et ferme ledit au moins un organe de commande (61) prévu dans l'élément d'aspiration (49).

7. Outil selon la revendication 5 ou 6, **caractérisé en ce que** l'organe de commande (61) est réalisé sous la forme d'une soupape, en particulier d'une soupape à tige actionnable (78).

8. Dispositif selon l'une quelconque des revendications précédentes, **caractérisé en ce que** ledit au moins un élément d'aspiration (49) est prévu pour être rattaché au corps de base d'outil (41) ou à la roue d'indexage (44) par une liaison séparable.

9. Dispositif selon l'une quelconque des revendications précédentes, **caractérisé en ce que** ledit au moins un élément d'aspiration (49) présente une partie de fixation (56) qui comprend le canal de fluide (53) et sur lequel est disposée une ventouse (51).

10. Outil selon l'une quelconque des revendications précédentes, **caractérisé en ce que** ladite au moins une ventouse (51) de l'élément d'aspiration (49) est réalisée en forme de soufflet et présente une surface d'appui (52) annulaire.

11. Outil selon l'une quelconque des revendications précédentes, **caractérisé en ce qu'**il est prévu une pluralité d'éléments d'aspiration (49) lesquels sont disposés de préférence les uns à la suite des autres dans un cercle circonférentiel sur le corps de base d'outil (41) ou sur la roue d'indexage (44), ou **en ce qu'**il est prévu au moins un élément d'aspiration (49) annulaire qui s'étend sur une partie d'un cercle circonférentiel ou sur la totalité de celui-ci, à savoir 360°.

12. Outil selon l'une quelconque des revendications précédentes, **caractérisé en ce qu'**au moins un outil d'usinage (81) est prévu de manière contiguë audit au moins un élément d'aspiration (49), de préférence à l'intérieur de l'élément d'aspiration (49) annulaire, ou à la pluralité des éléments d'aspiration (49) disposés dans un cercle circonférentiel et **en ce que** l'outil d'usinage (81) est au moins un outil de découpe et/ou un outil de clinchage.

13. Outil selon la revendication 12, **caractérisé en ce que** ledit au moins un outil d'usinage (81) prévu sur le corps de base d'outil (41) est prévu de manière fixe sur ledit corps de base d'outil (41) ou peut être activé par la roue d'indexage (44), et **en ce que** de préférence une face frontale de l'outil d'usinage (81) est en retrait par rapport à une face frontale dudit au moins un élément d'aspiration (49), ou que lesdites deux faces frontales se trouvent l'une et l'autre à la même hauteur séparées du corps de base d'outil (41) selon une distance donnée.

14. Procédé servant au moins à manipuler des pièces à usiner (34, 87), en particulier dans une machine-outil (11), avec un outil (20) qui présente un corps de base d'outil (41) et un nez de fixation (42) disposé de manière fixe sur le corps de base d'outil (41) ainsi qu'une roue d'indexage (44) disposée entre le nez de fixation (42) et le corps de base d'outil (41), le corps de base d'outil (41) et la roue d'indexage (44) pouvant tourner l'un par rapport à l'autre, **caractérisé en ce que**
- au moins un élément d'aspiration (49) qui est disposé sur une zone de réception (47) du corps de base d'outil (41) ou sur une zone de retenue (89) de la roue d'indexage (44) est apposé sur la pièce à manipuler (34, 87), puis comprimé,
- pendant ou après l'apposition dudit au moins un élément d'aspiration (49) sur la pièce à usiner (34, 87), on fait tourner la roue d'indexage (44) ou le corps de base d'outil (41), ce qui fait passer ledit au moins un élément d'aspiration (49) dans une position active (71),
- le fait de soulever l'outil (20) par rapport à la pièce à usiner (34, 87) provoque l'allongement dudit au moins un élément d'aspiration (49), ce qui fait que ce dernier se fixe par aspiration sur la pièce à usiner (34, 87), et -la pièce à usiner (34, 87) maintenue par ledit au moins un élément d'aspiration (49) est soulevée.

15. Procédé selon la revendication 14, **caractérisé en ce qu'**au moins un outil d'usinage (81) est prévu dans la zone de réception (47) du corps de base d'outil (41) de manière contiguë audit au moins un élément d'aspiration (49) disposé sur le corps de base d'outil (41) ou sur la roue d'indexage (44), et **en ce que** la pièce à usiner (34, 87) est usinée par l'outil d'usinage (81) avant, pendant ou après l'apposition dudit au moins un élément d'aspiration (49) sur ladite pièce à usiner (34, 87) et/ou la compression de celui-ci.
